# EUROPEAN PATENT APPLICATION

(11) **EP 4 525 378 A1**
(43) Date of publication of application: **19.03.2025**
(21) Application number: 24195883.4
(22) Date of filing: 22.08.2024
(51) Int. Cl.: H04L 12/46, G06F 9/54, H04L 41/0894, H04L 45/302, H04L 45/00, H04L 45/64, H04L 45/645, H04L 45/655, H04L 45/76, H04L 67/1095

(54) **APPARATUSES, METHODS AND NON-TRANSITORY COMPUTER-READABLE STORAGE MEDIUMS FOR NETWORK CONNECTIVITY**

(30) Priority: 14.09.2023 FI 20236026
(71) Applicant: Nokia Solutions and Networks Oy, 02610 Espoo (FI)
(72) Inventor: BHATIA, Randeep, Green Brook - NJ (US); BENNO, Steven, Towaco - NJ (US); BUDDHIKOT, Milind, Bridgewater - NJ (US)
(74) Representative: Nokia EPO representatives

(57) **Abstract**

A device for communicating within a network includes at least one processor and at least one memory storing instructions that, when executed by the processor, cause the device to receive, from a network gateway, a connectivity policy for the device and facilitate communication between the device and the network gateway according to the connectivity policy. The device includes a kernel with at least a first kernel tunnel and a second kernel tunnel. The connectivity policy specifies at least one of the first kernel tunnel or the second kernel tunnel for uplink transmission of packets from the device. The device includes a kernel virtual switch configured to switch between the first kernel tunnel and the second kernel tunnel to facilitate the communication between the device and the network gateway based on the connectivity policy.

## Description

### TECHNICAL FIELD

One or more example embodiments relate to methods, apparatuses, and/or non-transitory computer-readable storage mediums for facilitating connectivity between devices in a network.

### BACKGROUND

Industries may have different performance and reliability requirements for their networks. To meet these requirements, some networks may include different access network technologies and/or spectrum.

### SUMMARY

The scope of protection sought for various example embodiments is set out by the independent claims. The example embodiments and/or features, if any, described in this specification that do not fall under the scope of the independent claims are to be interpreted as examples useful for understanding various embodiments.

At least one example embodiments describes a device for communicating within a network. The device may include at least one processor and at least one memory storing instructions that, when executed by the processor, may cause the device to receive, from a network gateway, a connectivity policy for the device and facilitate communication between the device and the network gateway according to the connectivity policy. The device may include a kernel with at least a first kernel tunnel and a second kernel tunnel. The first kernel tunnel may connect the device to the network gateway via a first access network and the second kernel tunnel may connect the device to the network gateway via a second access network, The connectivity policy may specify at least one of the first kernel tunnel or the second kernel tunnel for uplink transmission of packets from the device. The device may include a kernel virtual switch configured to switch between the first kernel tunnel and the second kernel tunnel to facilitate the communication between the device and the network gateway based on the connectivity policy.

In at least one example embodiment, the at least one memory may store instructions that, when executed by the at least one processor, may cause the device to receive, from the network gateway, a virtual internet protocol (IP) address, default policies, and application policies for the device. In at least one example embodiment, the communication between the device and the network gateway may facilitate communication between the device and at least one other device via the virtual IP address of the device and a virtual IP address of the at least one other device. The virtual IP address of the at least one other device may be assigned by the network gateway. In at least one example embodiment, the communication between the device and the network gateway may facilitate communication between the device and a cloud-based device via the virtual IP address of the device and a physical IP address of the cloud-based device.

In at least one example embodiment, the at least one memory may store instructions that, when executed by the at least one processor, may cause the device to maintain the communication between the device and the network by switching from the first kernel tunnel to the second kernel tunnel upon an event indicating that communication should no longer occur via the first kernel tunnel.

In at least one example embodiment, the connectivity policy may specify a priority order of the first kernel tunnel and the second kernel tunnel for each network flow from the device.

In at least one example embodiment, the at least one memory may store instructions that, when executed by the at least one processor, may cause the device to replicate and send a packet from the device via each of the first kernel tunnel and the second kernel tunnel. A first packet may be accepted at a packet destination and a remainder of the packets may be discarded at the packet destination.

In at least one example embodiment, the connectivity policy may be overridden by another connectivity policy.

In at least one example embodiment, facilitating of the communication between the device and the network gateway according to the connectivity policy may include performing load balancing between the first kernel tunnel and the second kernel tunnel and directing data of the device to the network gateway based on the load balancing.

In at least one example embodiment, the device may be coupled with one or more tethered devices and the connectivity policy may include connectivity information for the one or more tethered devices. In at least one example embodiment, the at least one memory may store instructions that, when executed by the at least one processor, may cause the device to receive one or more tethered device connectivity policies specific to each of the one or more tethered devices.

In at least one example embodiment, the device may include at least one application, the at least one application configured to generate packets for uplink transmission from the device via the kernel virtual switch.

In at least one example embodiment, the at least one memory may store instructions that, when executed by the at least one processor, may cause the device to update the connectivity policy at the kernel virtual switch upon a change in a network condition.

Also described herein is a method for facilitating communication within a network. The method may include receiving, from a network gateway, a connectivity policy for the device and facilitating communication between the device and the network gateway according to the connectivity policy. The device may include a kernel with at least a first kernel tunnel and a second kernel tunnel. The first kernel tunnel may connect the device to the network gateway via a first access network and the second kernel tunnel may connect the device to the network gateway via a second access network, The connectivity policy may specify at least one of the first kernel tunnel or the second kernel tunnel for uplink transmission of packets from the device. The device may include a kernel virtual switch configured to switch between the first kernel tunnel and the second kernel tunnel to facilitate the communication between the device and the network gateway based on the connectivity policy.

Also described herein is a non-transitory computer-readable storage medium storing computer-executable instruction that, when executed by the at least one processor of a system, may cause the system to perform a method for facilitating communication within a network. The method may include receiving, from a network gateway, a connectivity policy for the device and facilitating communication between the device and the network gateway according to the connectivity policy. The device may include a kernel with at least a first kernel tunnel and a second kernel tunnel. The first kernel tunnel may connect the device to the network gateway via a first access network and the second kernel tunnel may connect the device to the network gateway via a second access network, The connectivity policy may specify at least one of the first kernel tunnel or the second kernel tunnel for uplink transmission of packets from the device. The device may include a kernel virtual switch configured to switch between the first kernel tunnel and the second kernel tunnel to facilitate the communication between the device and the network gateway based on the connectivity policy.

Also described herein is a network element for facilitating communication within a network. The network element may include means for receiving, from a network gateway, a connectivity policy for the device and facilitating communication between the device and the network gateway according to the connectivity policy. The device may include a kernel with at least a first kernel tunnel and a second kernel tunnel. The first kernel tunnel may connect the device to the network gateway via a first access network and the second kernel tunnel may connect the device to the network gateway via a second access network, The connectivity policy may specify at least one of the first kernel tunnel or the second kernel tunnel for uplink transmission of packets from the device. The device may include a kernel virtual switch configured to switch between the first kernel tunnel and the second kernel tunnel to facilitate the communication between the device and the network gateway based on the connectivity policy.

At least one example embodiment describes a network gateway for facilitating communication within a network. The network gateway may include at least one processor and at least one memory storing instructions that, when executed by the processor, may cause the device to send a connectivity policy to a device with the network and facilitate communication between the device and the network gateway according to the connectivity policy. The network gateway may include a kernel with at least a first kernel tunnel and a second kernel tunnel. The first kernel tunnel may connect the network gateway to the device via a first access network and the second kernel tunnel may connect the network gateway to the device via a second access network, The connectivity policy may specify at least one of the first kernel tunnel or the second kernel tunnel for downlink transmission of packets to the device. The network gateway may include a kernel virtual switch configured to switch between the first kernel tunnel and the second kernel tunnel to facilitate the communication between the device and the network gateway based on the connectivity policy.

In at least one example embodiment, the at least one memory may store instructions that, when executed by the at least one processor, may cause the network gateway to assign a virtual internet protocol (IP) address to the device within the network. In at least one example embodiment, the network gateway may be configured to facilitate the communication between the device and the network gateway to enable communication between the device and at least one other device via the virtual IP address of the device and a virtual IP address of the at least one other device. The virtual IP address of the at least one other device may be assigned by the network gateway. In at least one example embodiment, the network gateway may be configured to facilitate the communication between the device and the network gateway to enable communication between the device and a cloud-based device via the virtual IP address of the device and a physical IP address of the cloud-based device.

In at least one example embodiment, the at least one memory may store instructions that, when executed by the at least one processor, may cause the network gateway to maintain the communication between the device and the network by switching from the first kernel tunnel to the second kernel tunnel upon an event indicating that communication should no longer occur via the first kernel tunnel.

In at least one example embodiment, the connectivity policy may specify a priority order of the first kernel tunnel and the second kernel tunnel for each network flow from the network gateway.

In at least one example embodiment, the at least one memory may store instructions that, when executed by the at least one processor, may cause the network gateway to send a packet from the network gateway via each of the first kernel tunnel and the second kernel tunnel. A first packet may be accepted at a packet destination and a remainder of the packets may be discarded at the packet destination.

In at least one example embodiment, the connectivity policy may be overridden by another connectivity policy.

In at least one example embodiment, facilitating of the communication between the device and the network gateway according to the connectivity policy may include performing load balancing between the first kernel tunnel and the second kernel tunnel and directing data of the network gateway to the device based on network conditions.

In at least one example embodiment, the at least one memory may store instructions that, when executed by the at least one processor, may cause the network gateway to send one or more tethered device connectivity policies specific to the device for each of one or more tethered devices of the device.

In at least one example embodiment, the at least one memory may store instructions that, when executed by the at least one processor, may cause the network gateway to update the connectivity policy at the kernel virtual switch upon a change in a network condition.

Also described herein is a method for facilitating communication within a network. The method may include sending a connectivity policy to a device with the network and facilitating communication between the device and the network gateway according to the connectivity policy. The network gateway may include a kernel with at least a first kernel tunnel and a second kernel tunnel. The first kernel tunnel may connect the network gateway to the device via a first access network and the second kernel tunnel may connect the network gateway to the device via a second access network, The connectivity policy may specify at least one of the first kernel tunnel or the second kernel tunnel for downlink transmission of packets to the device. The network gateway may include a kernel virtual switch configured to switch between the first kernel tunnel and the second kernel tunnel to facilitate the communication between the device and the network gateway based on the connectivity policy.

Also described herein is a non-transitory computer-readable storage medium storing computer-executable instruction that, when executed by the at least one processor of a system, may cause the system to perform a method for facilitating communication within a network. The method may include sending a connectivity policy to a device with the network and facilitating communication between the device and the network gateway according to the connectivity policy. The network gateway may include a kernel with at least a first kernel tunnel and a second kernel tunnel. The first kernel tunnel may connect the network gateway to the device via a first access network and the second kernel tunnel may connect the network gateway to the device via a second access network, The connectivity policy may specify at least one of the first kernel tunnel or the second kernel tunnel for downlink transmission of packets to the device. The network gateway may include a kernel virtual switch configured to switch between the first kernel tunnel and the second kernel tunnel to facilitate the communication between the device and the network gateway based on the connectivity policy.

Also described herein is a network element for facilitating communication within a network. The network element may include means for sending a connectivity policy to a device with the network and facilitating communication between the device and the network gateway according to the connectivity policy. The network gateway may include a kernel with at least a first kernel tunnel and a second kernel tunnel. The first kernel tunnel may connect the network gateway to the device via a first access network and the second kernel tunnel may connect the network gateway to the device via a second access network, The connectivity policy may specify at least one of the first kernel tunnel or the second kernel tunnel for downlink transmission of packets to the device. The network gateway may include a kernel virtual switch configured to switch between the first kernel tunnel and the second kernel tunnel to facilitate the communication between the device and the network gateway based on the connectivity policy.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.
FIG. 1 illustrates an example embodiment of a network node that may implement the methods of network connectivity described herein.
FIG. 2 illustrates an example embodiment of a network including multiple devices and a network gateway, according to example embodiments.
FIG. 3 illustrates an example embodiment of a network device, according to example embodiments.
FIG. 4 illustrates an example embodiment of a network gateway, according to example embodiments.
FIG. 5 illustrates an example of kernel switch rules of a network, according to an example embodiment.
FIG. 6 is a flow chart of a method of providing uplink transmission of packets by a device within a network, according to example embodiments
FIG. 7 is a flow chart of a method of providing downlink transmission of packets by a gateway within a network, according to example embodiments.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

It should be understood that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

While one or more example embodiments may be described from the perspective of a function or network element such as a device, a device agent, a gateway, a gateway module, etc., it should be understood that one or more example embodiments discussed herein may be performed by one or more processors (or processing circuitry) at the applicable device, apparatus, or system. For example, according to one or more example embodiments, at least one memory may store instructions that, when executed by one or more processors, cause the device, the device agent, the gateway, the gateway module, or the like, to perform the operations discussed herein.

As discussed herein, the term "mechanism," in addition to its plain and ordinary meaning, may refer to methods, apparatuses and/or non-transitory computer readable storage mediums where applicable.

As discussed herein, the terminology "one or more" and "at least one" may be used interchangeably.

It will be appreciated that a number of example embodiments may be used in combination.

One or more example embodiments provide mechanisms to facilitate connectivity between devices within a network. The connectivity may be based on default connectivity policies for both uplink transmission and downlink transmission of packets within the network. The systems and methods described herein may make use of all available access networks and/or improve application performance by effectively combining different access technologies. The systems and methods described herein include presenting, to applications, a single unified software defined overlay network regardless of the number and type of access technologies in use, seamless handling of access handovers and the use of different networks by the applications, steering application traffic through preferred access networks that are configured through policies while dynamically adjusting application traffic based on network conditions, monitoring driven, disruption free, switching of application flows to better access networks for higher quality and reliability, load balancing across different access networks for reduced congestion and for higher throughput, and replication across multiple accesses for higher reliability and/or lower latency.

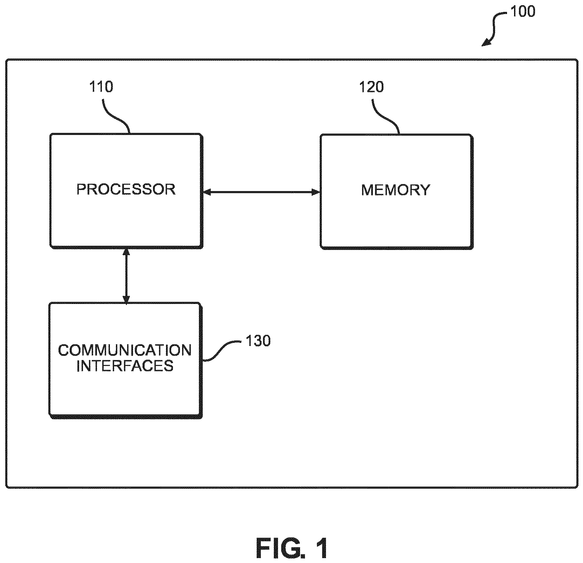

FIG. 1 illustrates an example embodiment of a network node 100 that may implement the devices, the device agents, the gateways, and/or the gateway modules described herein.

As shown, the network node includes: a processor 110, a memory 120 connected to the processor 110, and various communication interfaces 130 connected to the processor 110. The various communication interfaces 130 may constitute a transceiver for transmitting/receiving data from/to other network elements (e.g., devices, gateways, etc.). As will be appreciated, depending on the implementation of the network node 100, the network node 100 may include many more components than those shown in FIG. 1. However, it is not necessary that all of these generally conventional components be shown in order to disclose the illustrative example embodiment. For example purposes, the example embodiment shown in FIG. 1 will be discussed with regard to a processor 110. However, it should be understood that the network node 100 shown in FIG. 1 may include one or more processors or other processing circuitry, such as one or more Application Specific Integrated Circuits (ASICs).

The memory 120 may be a computer readable storage medium that generally includes a random access memory (RAM), read only memory (ROM), and/or a permanent mass storage device, such as a disk drive. The memory 120 may also store an operating system and any other routines/modules/applications for providing the functionalities of the system 100 (including UPF, CPF, MPF, etc.) to be executed by the processor 110. These software components may also be loaded from a separate computer readable storage medium into the memory 120 using a drive mechanism (not shown). Such separate computer readable storage medium may include a disc, tape, DVD/CD-ROM drive, memory card, or other like computer readable storage medium (not shown). In some example embodiments, software components may be loaded into the memory 120 via one of the various communication interfaces 130, rather than via a computer readable storage medium.

The processor 110 or other processing circuitry may be configured to carry out instructions of a computer program by performing the arithmetical, logical, and input/output operations of the system. Instructions may be provided to the processor 110 by the memory 120.

The various communication interfaces 130 may be wired and may include components that interface the processor 110 with the other input/output components. As will be understood, the various communication interfaces 130 and programs stored in the memory 120 to set forth the special purpose functionalities of the system 100 will vary depending on the implementation of the device and/or gateway.

The various communication interfaces 130 may also include one or more user input devices (e.g., a keyboard, a keypad, a mouse, or the like) and user output devices (e.g., a display, a speaker, or the like).

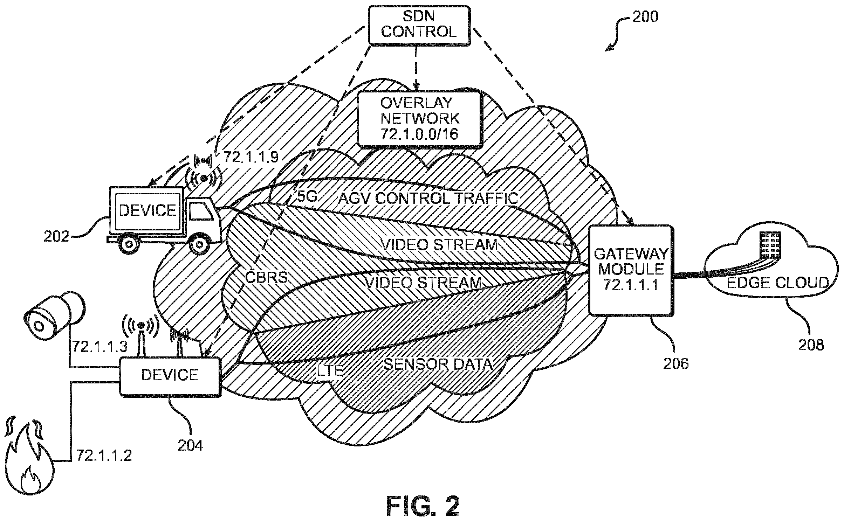

The processor 110, the memory 120, and the various communication interfaces 130 may implement the elements described herein of the devices and gateways as shown at least in FIGs. 2-4.

FIG. 2 illustrates a network 200 according to an example embodiment. The network 200 may be a software defined network (SDN) based kernel-space solution for combining different access networks of an industrial space. This network may employ a software defined overlay that aggregates access networks of network devices into one network. In at least one example embodiment, the network 200 may include one or more network devices 202, 204 that may be communicatively coupled with a gateway module 206. The network may also include an edge cloud 208 that may additionally be communicatively coupled with the gateway module 206. The gateway module 206 may be an element of a gateway of the network 200. The edge cloud 208 may also be referred to herein as a cloud or a cloud-based device.

In at least one example embodiment, each of the devices, the gateway, and the cloud may include a user space and a kernel space. Each of the kernel spaces may include a kernel virtual switch that may be configured to select a kernel tunnel of a device kernel for at least one of uplink transmission or downlink transmission of packets within the network. An example kernel space may be a Linux kernel space. In particular, each kernel virtual switch of a device may be configured to select a kernel tunnel for uplink transmission of packets and a kernel virtual switch of the gateway may be configured to select a kernel tunnel for downlink transmission of packets. The tunnel selections by the kernel virtual switches may be dynamic, not static. The kernel virtual switches may be capable of dynamically adjusting a tunnel selection to adapt to changing access networks load and/or availability. In particular, data may be switched from a first kernel tunnel of a device kernel to a second kernel tunnel for a first application and, concurrently or simultaneously, data may be switched from the second kernel tunnel to the first kernel tunnel of the device kernel for a second application. In general, different data packets from the device may be routed and updated dynamically via the kernel virtual switch. Each of the kernel tunnels may be configured to route data or packets via a particular access network for communication within the network 200.

The user space or each element of the network may be a control plane that may program the kernel virtual switch of the respective element. Then, each of the kernel virtual switches may be configured to carry out the control logic of the control plane. Thus, the user space may be able to provide flexible, intent and/or policy-based adaptation of the kernel space of each element. The kernel space may be responsible (e.g., solely responsible) for rule based, high performance Match-Action packet and flow processing. Match-Action packet and flow processing may include analyzing incoming network packets and determining how to handle the network packets based on predefined rules. Match-Action packet and flow processing may involve two steps: matching and action. The matching steps may include comparing values in fields of the packet header to a set of predefined rules to determine if the packet matches any of these rules. If the packet does match a predefined rule, then the action step may forward the packet to a specific interface or tunnel, drop the packet, replicate the packet, or change at least one field in the packet header. This configuration is a solution that avoids additional stateful network protocols and congestion control as well as protocol proxying and conversion performed in the user space. This configuration may also allow for multi-gigabits per second (Gbps) line rate performance with negligible central processing unit (CPU) and memory overhead even on lower-end devices.

Additionally, the devices of the network may be kept lightweight so that overhead and/or performance penalties are relatively low and/or negligible even on lower-end industrial devices. To keep the devices lightweight, the gateway may process tasks needed by the devices and in particular may process relatively high intensity tasks. In particular, the gateway may compute, in real-time, policy-based controls at a device for optimized traffic management across different accesses, to adapt to changes in network conditions. The gateway may also perform the computation needed for periodic re-optimization and/or re-balancing of device traffic across different accesses. To perform these tasks, each device may communicate with the gateway to keep the gateway informed of its local state (e.g., access network quality and load) by sending the gateway updates and periodic reports. Thus, the gateway may be able to have an accurate view of the conditions of each device and may be able to make accurate decisions on behalf of each device. Because the gateway is in communication with each device of the network, the gateway has a global view of the state of all the devices and access networks in the overlay and may have the ability to make improved and/or more optimal decisions based on the global view of the network. Once the gateway makes policy decisions, the policy decisions may be communicated to each device, for example via a connectivity policy. Then, each device may apply the connectivity policies with relatively low (e.g., minimal) processing.

Referring in more detail to FIG. 2, in at least one example embodiment, the network 200 includes a first device 202 and a second device 204. The network 200 also includes the gateway module 206 and the cloud 208. There may be multiple access networks that the first device 202 and the second device 204 may use to communicate with the gateway module 206. For example, the first device 202 may be configured to communicate with the gateway module 206 via a 5G network or citizens broadband radio service (CBRS) and the second device 204 may be configured to communicate with the gateway module 206 via CBRS or 3rd Generation Partnership Project (3GPP) Long-Term Evolution (LTE). In at least one example embodiment, automated guided vehicle (AGV) control traffic from the first device 202 may be communicated with the gateway module 206 via a 5G access network while a video stream from the first device 202 may be communicated with the gateway module 206 vie a CBRS access network. Similarly, a video stream from the second device 204 may be communicated with the gateway module 206 vie a CBRS access network while sensor data of the second device 204 may be communicated via the LTE network.

As described above, the user space of each of the first device 202 and the second device 204 may configure the kernel virtual switch within the kernel space of each of the first device 202 and the second device 204. Thus, the virtual kernel switch of the first device 202 may route the AGV control traffic and the video stream to different kernel tunnels to communicate via the desired access networks for uplink transmission of packets from the first device 202. Any downlink transmission of data or packets to the first device 202 or the second device 204 may be configured by a user space of the gateway module 206 and routed to the respective device via a kernel virtual switch of the gateway module 206.

In at least one example embodiment, the decision to route specific data via a specific access network may be set in a connectivity policy. The connectivity policy may be changed via an updated connectivity policy that may be determined by the device itself or may be communicated to each device from the gateway module 206. The updated connectivity policy may apply generically to a device such as the first device 202 or may update selective applications of the first device 202 without changing or updating other policies of the connectivity policy. Additionally, the connectivity policy may specify a priority order of access networks. For example, a connectivity policy for the first device 202 may specify that AGV control traffic should be routed to the gateway module 206 via the 5G network as a first priority and via the CBRS as a second priority. Thus, if the 5G network is not available because of an interruption in connectivity or for another reason, AGV control traffic may be routed between the first device 202 and the gateway module 206 via the CBRS access network.

In at least one example embodiment, if data is switched from a first kernel tunnel to a second kernel tunnel of a device kernel in an uplink direction at the first device 202, the gateway module 206 may also be configured to switch the downlink direction from a first kernel tunnel to a second kernel tunnel of a kernel of the gateway module 206. This may synchronize the first device 202 and the gateway module 206. In other embodiments, if a connectivity policy for uplink transmission is updated, the connectivity policy for downlink transmission may not be updated at the same time as the uplink transmission update. For example, if data is switched from a first kernel tunnel to a second kernel tunnel of a device kernel in an uplink direction at the first device 202, the gateway module 206 may continue to use the second kernel tunnel of the kernel of the gateway module 206 rather than switching the downlink direction from a first kernel tunnel to a second kernel tunnel of a kernel of the gateway module 206.

In at least one example embodiment, a connectivity policy may additionally define a solution that may specify a traffic class for a specific type of application of a device. For example, a location update application of a cloud-controlled robot may be assigned to a lower latency class. Thus, traffic from the location update application may be dynamically switched, driven by network monitoring, across different access networks to ensure that the traffic stays on the best access network with the least latency. A connectivity policy may additionally relate to load-balancing. A connectivity policy that includes load-balancing instructions may specify the proportion of a traffic load that is to be distributed across each available access network over a certain number of available access networks. For example, a policy manager of a device or a gateway of a network may be configured to compute SDN flow rules for a given set of policies based on real-time access network load and a quality feed from a monitoring component. Any of the above-described flow rules may be dynamically inserted in the kernel virtual switches. In at least one example embodiment, a SDN controller of each of the first device 202, the second device 204, or the gateway module 206 may be configured to program or insert the connectivity policy to the kernel virtual switch of the respective network element. Thus, the kernel space of each network element is configured to enforce the connectivity policy at line rate with relatively low and/or negligible CPU and/or memory overhead.

The network 200 may operate via an overlay. The overlay may assign a virtual internet protocol (IP) address to each element of the network 200 to facilitate communication within the network 200.

As shown in FIG. 2, for example, the overlay may assign the gateway module 206 a virtual IP address of 72.1.1.1, the first device 202 a virtual IP address of 72.1.1.9, and the second device 204 a virtual IP address of 72.1.1.2. Each of the devices may be connected via these virtual IP addresses and may be connected to the cloud 208 via these virtual IP addresses. In at least one example embodiment, the cloud 208 may utilize a physical IP address. In at least one example embodiment, the overlay may be built using SDN and may be programmed through SDN-based control mechanisms.

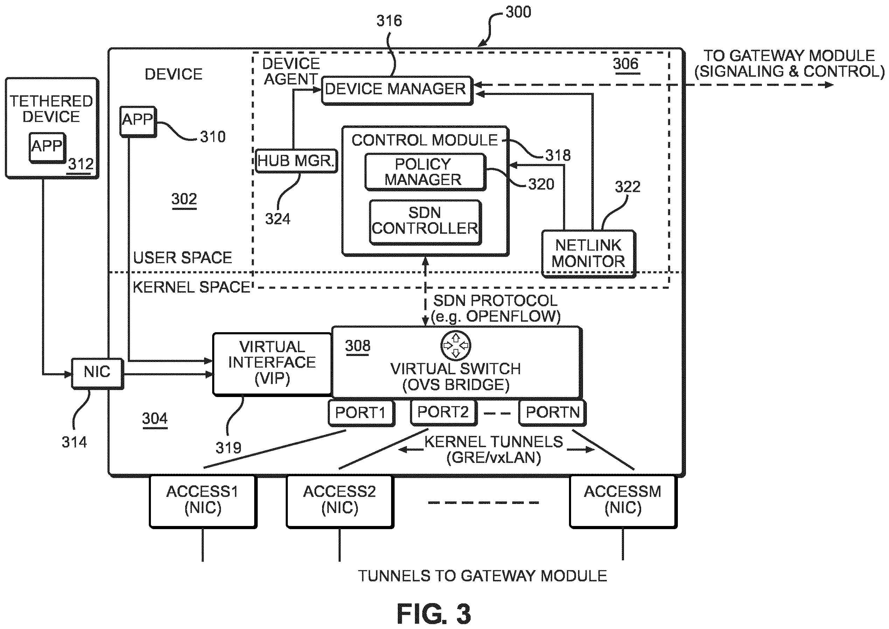

FIG. 3 illustrates an example embodiment of a device 300 of the network 200. The device 300 in FIG. 3 is an example implementation of one or more of devices 202 and 204 shown in FIG. 2.

Referring to FIG. 3, the device 300 may include a user space 302 and a kernel space 304 as described above. The device 300 may include a device agent 306 within the user space 302 that may communicate with a gateway module of the network 200. The device agent 306 may also be configured to communicate with a kernel virtual switch 308 within the kernel space 304 of the device 300. The device 300 may also include one or more applications 310 that may generate packets for uplink transmission within the network 200. In at least one example embodiment, the device 300 may be communicatively coupled with one or more tethered devices 312. The one or more tethered devices 312 may be coupled with the device 300 via a network interface controller (NIC) 314.

The device agent 306 of the device 300 may include a device manager 316 configured to interface with other components of the device agent 306 and the gateway module. In at least one example embodiment, the device manager 316 may be configured to exchange signaling and control information with the gateway module. In at least one example embodiment, the device manager 316 may have a transmission control protocol (TCP) connection with the gateway module over each available access network (Access 1, Access2, ... AccessN) to which the device 300 is connected. Communication between the device 300, via the device manager 316, and the gateway module may be more reliable by replicating each message between the device 300 and the gateway module and sending the message over all access networks concurrently or simultaneously. At the receiver side, the first received message may be accepted for processing and all duplicate messages may be discarded. This may provide signaling between the device 300 and the gateway module even when the device 300 has lost connectivity via one access network.

Signaling between the device 300, via the device manager 316, and the gateway module may include authorization and/or re-registration of the device 300 with the gateway module. This signaling may occur at startup of the device 300, when the device 300 is recovering from a prior failure, or when the gateway module is restarted. The device manager 316 may send information about the device such as a unique hostname/ID, and/or device capabilities to the gateway. The device manager 316 may receive an authorization token for future use and a virtual IP address for the device 300. The virtual IP address may be assigned to the device 300 by the gateway module via an overlay as described above. The device manager 316 and the gateway module may communicate to onboard the device 300 into the overlay network for communication within the network 200.

Signaling between the device 300, via the device manager 316, and the gateway module may also include signaling for periodic heartbeats and keep-alives that may be sent by the device manager 316 to the gateway module. Responses to the periodic heartbeats may be received by the device manager 316 from the gateway module. Errors and/or losses in heartbeats and their responses may be used for failure detection including loss of connectivity, failure of a component such as the device manager 316 or the gateway module, and/or to trigger migration to a recovery state or to restart one or more failed components.

Signaling between the device 300, via the device manager 316, and the gateway module may also include obtaining operator and/or application policies for the overlay from gateway module. Obtaining these policies may occur at startup of the device 300 and/or during recovery from failure of the device 300. Policies may also be pushed by the gateway module to the device manager 316 when there is a change in a policy that impacts the device 300. For example, policies may change because of a change made by an operator or due to changes in access network conditions such as load or quality that may impact how application traffic is managed across different access networks for the device 300.

Signaling between the device 300, via the device manager 316, and the gateway module may also include communicating an access network state, such as load or quality changes, to the gateway module. For example, changes such as the availability of a new access or loss of access or changes in physical layer parameters such as signal strength, link quality and/or changes in higher layer parameters such as throughput, round-trip time (RTT), packet loss, driver/NIC queue occupancy, or similar parameters may be communicated to the gateway module.

Signaling between the device 300, via the device manager 316, and the gateway module may also include exchanging information related to the one or more tethered devices 312. For example, the device manager 316 may send information about newly discovered local tethered devices to the gateway module. The device manager 316 may also obtain information from the gateway module about other tethered devices in the overlay that are tethered to remote devices. Additionally, the device manager 316 may obtain policies such as connectivity policies for local tethered devices, such as the one or more tethered devices 312, from the gateway module.

The device agent 306 may also include a control module 318 for executing the solutions control logic for the device 300, such as a connectivity policy, and for configuring, programming and/or controlling the kernel virtual switch 308 for carrying out the solution logic. In at least one example embodiment, the kernel virtual switch 308 may be an Open vSwitch (OVS). When the device 300 is started or restarted, the control module 318 may configure the kernel virtual switch 308 by setting up one or more bridges. For example, the control module may set up one edge bridge, which may be an interface to the network, and one core bridge, which may be a central interface for routing and for forwarding of traffic from the one or more applications and the one or more tethered devices 312 via the overlay. The control module 318 may create a virtual interface 319 on the core bridge and assign, to the virtual interface 319, the virtual IP address for the device 300 that has been obtained from the gateway module by the device manager 316. The control module 318 may also set up routing and forwarding entries from the device 300 for the overlay to ensure that all uplink application traffic is forwarded via the core bridge and is transported via the edge bridge over the different access networks. The control module 318 may also create ports (Port1, Port2, ... PortN) on the kernel virtual switch 308. Each port on the kernel virtual switch 308 may be coupled to a kernel tunnel. Each of the kernel tunnels may provide access to the network via one of the access networks Access 1, Access2, ... AccessN of the device 300. Each of the kernel tunnels may be configured to transport application traffic across the different access networks, between the device 300 and the gateway module.

The control module 318 may be responsible for programming the kernel virtual switch 308 with flow specific rules for determining how packets of each flow are processed in a kernel data path and which ports/ tunnels are used for transporting those packets to the gateway module. In at least one example embodiment, the control module 318 may include a policy manager 320 that may process application and operator policies received from the gateway module to determine flow rules in the kernel virtual switch 308 needed to enforce those policies. The control module 318 may also react in real-time to any changes in a state of an access network to adjust and/or re-optimize the set of flow rules for the kernel virtual switch 308. For example, if the device 300 loses connectivity or when its connectivity to an access network is diminished, the control module 318 may update the rules or policies for all the application flows that were being sent over that access network to direct them over a different access network or access networks to which the device 300 has better connectivity. In general, connectivity policies are determined by the gateway module except when quick intervention by the device 300 is required such as when application flows need to be more immediately moved off an access network through which connectivity is lost.

In general, the control module 318 does not process a connectivity policy unless instructions are received to do so from the gateway module. In particular, for example, the device manager 316 may send a request to the gateway module for the gateway module to process a connectivity policy to identify a set of device application flows that may be impacted and to prepare a set of policies to send to the device manager 316. The device manager 316 may send the policies to the control module 318 to translate into flow rules for the kernel virtual switch 308 with relatively little or minimal local processing. Additionally, policies from the gateway module may be pushed to the device manager 316 for communication with the control module 318 upon initiation by the gateway module.

Various types of connectivity policies may be utilized by the network 200. For example, there may be default connectivity policies, application and/or device specific policies, and hub policies. A default connectivity policy may specify a default behavior of steering flows across the different access networks. In particular, a default connectivity policy may not be application or device specific, but rather may be generic across all devices and/or applications of the network. For example, a default connectivity policy may specify that the 5G network is always preferred. Thus, communication of the device 300 may occur via the 5G network unless the 5G network is not available. A default connectivity policy may also specify a second preferred access in case the first access is unusable and a third preferred access if the second preferred access is also unusable, etc. In general, a default connectivity policy may be relatively simple and may have a relatively highly scalable implementation with a relatively small number of flow rules for the kernel virtual switch.

Application and/or device specific policies may be individualized connectivity policies based on a particular application and/or device. For example, an application and/or device specific policy may specify that the 5G network is preferred for a first application of a device, but that the LTE network is preferred for a second application of the device. Similar to a default connectivity policy, an application and/or device specific policy may also specify a second preferred access in case the first access is unusable and a third preferred access if the second preferred access is also unusable, etc.

A hub policy may be a connectivity policy that is applied to a tethered device. In at least one example embodiment, a hub policy may make a tethered device addressable in the overlay by assigning the tethered device a unique virtual IP address. Thus, another network device may be able to initiate an IP connection to a tethered device using its virtual IP address. Similarly, a tethered device may be able to make IP connections to another device within the network using its VIP address. A tethered device may not include its own device agent, and thus, a device agent of a device may be configured to implement the hub policy. In particular, to facilitate communication to a tethered device, the device may receive a data packet utilizing the assigned virtual IP address of the tethered device. The device may then convert between the virtual IP address of the tethered device and a physical IP address of the tethered device to locally forward the data packet to the tethered device. Similarly, to facilitate communication from a tethered device, the device may receive a data packet from the tethered device via its physical IP address. The device may then convert between the physical IP address of the tethered device and the virtual IP address of the tethered device to forward the data packet via the kernel virtual switch of the device. A hub policy may be established whenever a new local tethered device is discovered by a hub manager component of the device agent or when information about a remote tethered device is sent by the gateway module to the device.

The device agent 306 may also include a NetLink monitor 322 for monitoring the state of the different access networks and reporting changes to the control module 318 and the device manager 316 for further communication to the gateway module. The NetLink monitor 322 may use a mix of active and passive probing to monitor availability of a new access network or loss of connectivity to an access network, along with physical layer parameters such as signal strength, link quality and/or higher layer parameters such as throughput (aggregate and/or per flow), one way and two-way latencies, packet loss, driver/NIC/kernel queue occupancy, or other similar methods. Based on this monitoring, the NetLink monitor 322 may identify and report to the control module 318 and the gateway module, via the device manager 316, events that may impact their decision logic. For example, the NetLink monitor 322 may identify and report events such as link loss or degradation in link quality which may require fast remedial actions by the control module 318 and/or the gateway module. Additionally, the NetLink monitor 322 may periodically report monitored parameters to the control module 318 and the gateway module, via the device manager 316, to allow the control module 318 and the gateway module to re-optimize and/or re-balance traffic across different access networks.

The device agent 306 may further include the hub manager 324 responsible for tracking other devices that may be tethered to the device 300 for connectivity. In embodiments where the device 300 is coupled to the one or more tethered devices 312, the device 300 may be a router or a hub that may act as an IP gateway for external connectivity for the one or more tethered devices 312. In at least one example embodiment, the hub manager 324 may be provided with a list of media access control (MAC) addresses for managed tethered devices by the gateway module, via the device manager 316. The hub manager may periodically or constantly search for these MAC addresses in a neighbor table and "netlink-kernel" reported events of its host router/device. In at least one example embodiment, a neighbor table may be a data structure configured to map IP addresses to MAC addresses on a local network. The neighbor table may provide an efficient way for a network device to find MAC addresses of other network devices without the need for frequent address resolution. Netlink-kernel is a communication mechanism in Linux that allows user-level programs to interact with a kernel. The netlink-kernel may be used for monitoring network events. For example, the netlink-kernel may allow clients to receive notifications about network-related events, such as interface changes, or neighbor table modifications.

The hub manager may also monitor address resolution protocol (ARP) and dynamic host configuration protocol (DHCP) messages between the device 300 and the one or more tethered devices 312 to search for the one or more tethered devices 312. Upon discovering a managed tethered device, the hub manager 324 may obtain a physical IP address of the tethered device through kernel system calls and may wait for connectivity through the device. The hub manager 324 may additionally report the availability of the tethered device to the control module 318 as well as the gateway module via the device manager 316. The control module 318 may then set associated flow rules for the tethered device in the local kernel virtual switch 308 such as the hub policies described above. In at least one example embodiment, when the gateway module receives information on a tethered device, the gateway module may distribute that information to the device agents of other devices along with hub policies that the device agents of the devices need to update their flow rules in their respective kernel virtual switches.

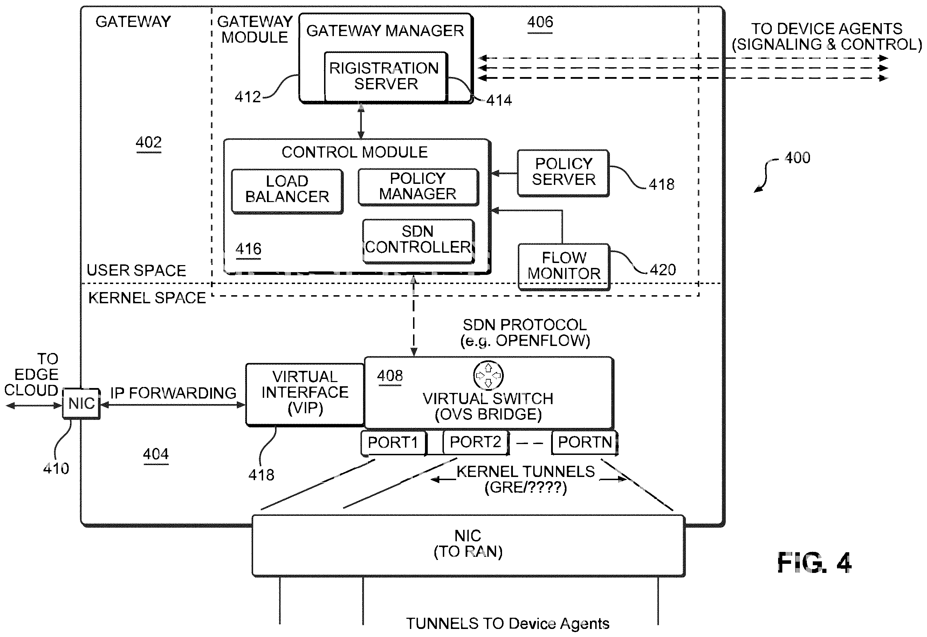

FIG. 4 illustrates an example embodiment of a gateway 400 of the network 200. The gateway 400 is an example of a gateway that includes the gateway module 206 in FIG. 2.

Referring to FIG. 4, the gateway 400 may include a user space 402 and a kernel space 404 as described above. The gateway 400 may include a gateway module 406 within the user space 402 that may be communicate with a device agent of, for example, device 300. The gateway module 406 may be analogous to the gateway module 206 described above in FIG. 2. The gateway module 406 may also be configured to communicate with a kernel virtual switch 408 within the kernel space 404 of the gateway 400. The gateway 400 may be communicatively coupled with cloud 208. The cloud 208 may be coupled with the gateway 400 via a NIC 410.

The gateway module 406 of the gateway 400 may include a gateway manager 412 configured to interface with other components of the gateway module 406 and a device agent of each device within the network 200. In at least one example embodiment, the gateway manager 412 may be configured exchange signaling and control information with the device agent of each device within the network 200. The gateway manager 412 may also be configured to register, authorize, and assign virtual IP address to each of the devices in the overlay via a registration server 414 of the gateway manager 412. The gateway manager 412 may also track a state of every device agent of each device within the network 200 through periodic heartbeats and keep-alives. Further, the gateway manager 412 may receive changes in access state, or periodic reports on access parameters sent by the different device agents and may pass these changes or reports to a control module 416 of the gateway module 406 for further processing. The gateway manager 412 may also process policy related requests from different device agents and may pass the requests to the control module 416. The gateway manager 412 may also respond back to the device agents with the set of device policies received from the control module 416.

The gateway module 406 may include the control module 416 that may execute global control logic that applies to all of the devices in the overlay. The control module 416 may also be configured to configure, program, and control the kernel space virtual switch 408 for managing application traffic across the access networks for the different devices in the downlink direction. The control module 416 may also provide IP gateway functionality that allows applications IP connectivity to the edge cloud, in the overlay, through IP forwarding. Similar to the control module 318 of the device agent 306 described above, the control module 318 of the gateway module may be configured to set up an edge bridge and a core bridge. The control module 318 may create a virtual interface 418 on the core bridge and assign a virtual IP address for the gateway 400 to the virtual interface 418. The control module 416 may set up routing and forwarding entries in the host machine to ensure forwarding between the overlay network and any external endpoint outside the overlay network. This routing may be set up via multi-access connectivity between overlay endpoints and the cloud 208.

A device may be configured to register with the gateway module 406 which may cause the control module 416 of the gateway module 412 to create an initial set of ports on the kernel virtual switch for the device and attach kernel tunnels to these ports for the access networks reported in the registration message by the device. The control module 416 may add additional ports and kernel tunnels for registered devices when they report availability of new access networks. Each kernel tunnel of the gateway 400 is for the downlink direction and may operate in conjunction with a counterpart tunnel set up by the control module of the corresponding device agent for the uplink direction. Together, the pair of uplink and downlink tunnels are used for transporting application traffic across the different access networks, between the device and the gateway 400.

The kernel virtual switch 408 of the gateway 400 may be a central hub for all the kernel tunnels for all accesses for all the devices. The kernel virtual switch 408 of the gateway 400 may be configured to direct traffic across these different tunnels which may provide flexible overlay connectivity among the different devices using any combination of different access networks. The control module 416 of the gateway module 406 may program its kernel virtual switch with flow specific rules that determine how packets of each flow are processed in the kernel data path and which ports and/or tunnels are used for transporting those packets to different device agents in the downlink direction. In at least one example embodiment, the control module 416 may include a load balancer which may be configured to determine which flow rules to set in the kernel virtual switch 408 to keep loads balanced in proportion to operator specified weights across different access networks for a given device. The control module 416 of the gateway module 406 may also compute connectivity policies to send to device agents of each device for applying flow rules in their kernel virtual switches in the uplink direction as described above.

The gateway module 406 may also include a flow monitor 420 for monitoring application flows of all devices over all access networks, including per flow throughput in both downlink and uplink directions and reporting this to the control module 416 of the gateway module 412. The flow monitor 420 may passively monitor all the application flows in the overlay to determine how many flows are there for a given device on a given access network and how much throughput each flow is getting at any given time. This information may be used by the load balancer of the control module 416 to identify when a proportional load across different access networks of a device has deviated from operator specified targets. This information may also allow the load balancer to identify the set of flows whose accesses need to be switched to restore the balanced state. Thus, the control module 416 of the gateway module 412 is able to apply load balancing policies both locally in the gateway module 406 and at the corresponding device agent to bring the system back to a load balanced state. For example, load balancing may involve switching from a first kernel tunnel to a second kernel tunnel and directing data of the gateway 400 to a device of the network 200 based on network conditions.

The gateway module 406 may also include a policy server 418 for setting and updating operator and application policies for one or more devices. As described above, control logic may be configured and molded through operator and application specific policies. These policies may provide the flexibility of adapting the data plane of the network based on application and network needs and provide the set of actions to undertake different scenarios related to network quality and/or load. The policy server 418 may define each of these policies for the network. In particular, for example, the policy server 418 may provide a policy description language in which policies can be specified. The policy server 418 may also be configured to add new policies to the network, or update or delete existing policies.

The gateway 400 and the devices 300 as described herein may provide connectivity to a relatively large number of diverse devices (e.g., sensors, IP cameras, AGVs) that may be located in one or many far edges of geographically separated, WAN connected, sites. The gateway 400 may also be configured to discover devices within a forwarding control plane through efficient handling of ARP requests and responses. In particular, for example, local ARP proxying and unicast SDN based forwarding of ARP request and response messages may be utilized.

Local proxying of ARP request may be used for tethered devices since there can be a relatively large number of devices attached to a router and broadcasting ARPs for the devices can have performance issues. For this, the ARP entries for tethered devices are pushed to all the devices in the overlay so that an ARP request for a tethered device may be served locally at the device without forwarding the request to the gateway. The unicast based ARP forwarding may be used for all other devices. This may be accomplished by setting flow rules in the gateway kernel switch that may match ARP destination addresses and directly send them to the respective devices. The unicast based ARP forwarding may provide a more efficient forwarding approach than traditional broadcasting ARPs.

Additionally, forwarding uplink traffic from a device to a gateway may ensure that the kernel virtual switch of the device does not need to maintain a forwarding state for every other device in the overlay. Thus, the number of flow rules in kernel virtual switches of devices do not increase and are maintained as new devices are added to the overlay.

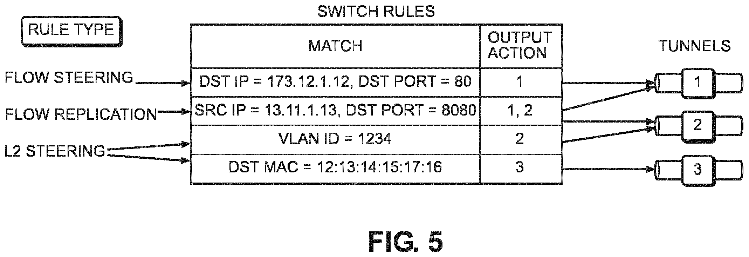

FIG. 5 illustrates an example of kernel switch rules of a device. These kernel switch rules may be flow rules that are applied in the uplink direction. For instance, the Flow Steering rule may ensure that all overlay uplink application traffic from the device that is destined for IP address 173.12.1.12 and port 80 will be sent out through virtual switch port 1 and will therefore be transported on Tunnel 1 and its associated access between the device and the gateway. The Flow Replication rule may replicate all overlay uplink application traffic from the device that is destined for IP address 13.11.1.13 and port 8080 and send out a (e.g., one) copy of the packet through virtual switch port 1 and another copy of the packet through virtual switch port 2. Thus, these duplicated packets will be transported over the different access networks that are associated with tunnels 1 and 2, between the device and the gateway. The L2 Steering flow rules may be used for steering of uplink traffic by matching header fields in the L2 frame such as VLAN Tags or MAC addresses.

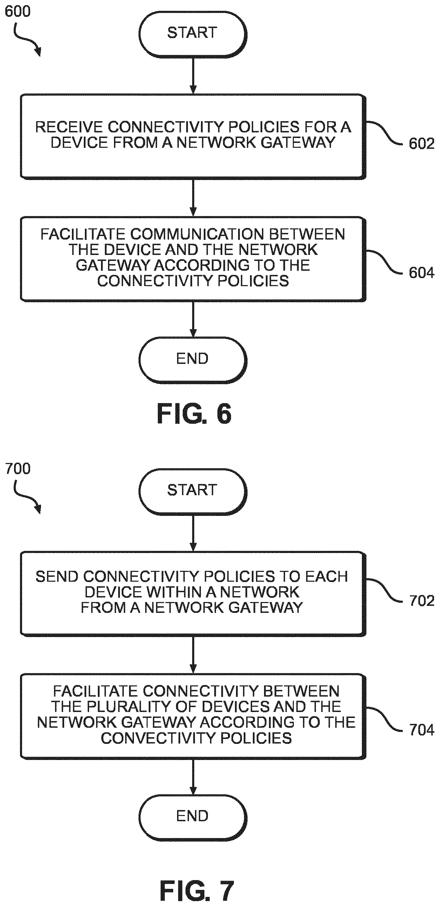

FIG. 6 is a flow chart of a method of facilitating uplink transmission of packets by a device within a network, according to example embodiments. For example purposes, the method shown in FIG. 6 will be discussed with regard to the device 300 and gateway 400 shown in FIGS. 3 and 4, respectively.

Referring to FIG. 6, at step 602, the device 300 receives connectivity policies from the gateway 400. In particular, for example, the device 300 may receive connectivity policies from a gateway module 406 of the gateway 400 via the device manager 316 of the device agent 306 of the device 300. The connectivity policies may be implemented in the kernel virtual switch of the device via the control manager of the device agent as described above.

At step 604, the kernel virtual switch 308 of the device 300 facilitates communication between the device 300 and the gateway 400 according to the connectivity policies. In particular, for example, if the one or more applications 310 or the one or more tethered devices 312 of the device 300 have a packet for uplink transmission, the packet may be received at the kernel virtual switch 308 of the device 300. The kernel virtual switch 308 may process the packet for upload via connectivity policies received from the control module 318 of the device agent 306 which are received from the control module 416 of the gateway module 406.

FIG. 7 is a flow chart of a method of facilitating downlink transmission of packets by a gateway within a network. As with FIG. 6, for example purposes, the method shown in FIG. 7 will be discussed with regard to the device 300 and gateway 400 shown in FIGS. 3 and 4, respectively.

Referring to FIG. 7, at step 702, the gateway 400 sends connectivity policies to each of a plurality of devices within a network. In particular, for example, the gateway 400 may send connectivity policies from a gateway module 406 of the gateway 400 to the device agent 406 of the device 300 and any other device within the network 200. The connectivity policies may be implemented in the kernel virtual switch of each of the devices via the control manager of each of the device agent as described above.

At step 704, a kernel virtual switch 408 of the gateway 400 facilitates communication between each of the devices and the gateway 400 according to the connectivity policies. In particular, for example, if the one or more applications 310 or the one or more tethered devices 312 of the device 300 have a packet for downlink transmission, the packet may be received at the kernel virtual switch 408 of the gateway 400. The kernel virtual switch 408 may process the packet for downlink via connectivity policies determined by the control module 416 of the gateway module 406, which have been communicated with the device agent of a corresponding device.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/ acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing network nodes, BNGs, servers, ANs, CPEs, routers, or other network elements and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, network functions, SCPs, data centers, or other network elements, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A device for communicating within a network, the device comprising:
means for causing the device to
receive, from a network gateway, a connectivity policy for the device; and
facilitate communication between the device and the network gateway according to the connectivity policy, wherein
the device includes a kernel with at least a first kernel tunnel and a second kernel tunnel, the first kernel tunnel connecting the device to the network gateway via a first access network and the second kernel tunnel connecting the device to the network gateway via a second access network,
the connectivity policy specifies at least one of the first kernel tunnel or the second kernel tunnel for uplink transmission of packets from the device, and
the device includes a kernel virtual switch configured to switch between the first kernel tunnel and the second kernel tunnel to facilitate the communication between the device and the network gateway based on the connectivity policy.

2. The device of claim 1, wherein the means cause the device to:
receive, from the network gateway, a virtual internet protocol (IP) address, default policies, and application policies for the device, wherein the communication between the device and the network gateway facilitates communication between the device and at least one other device via the virtual IP address of the device and a virtual IP address of the at least one other device, the virtual IP address of the at least one other device being assigned by the network gateway.

3. The device of claim 2, wherein the communication between the device and the network gateway facilitates communication between the device and a cloud-based device via the virtual IP address of the device and a physical IP address of the cloud-based device.

4. The device of any one of the preceding claims, wherein the means cause the device to:
maintain the communication between the device and the network by switching from the first kernel tunnel to the second kernel tunnel upon an event indicating that communication should no longer occur via the first kernel tunnel.

5. The device of any one of the preceding claims, wherein the connectivity policy specifies a priority order of the first kernel tunnel and the second kernel tunnel for each network flow from the device.

6. The device of any one of the preceding claims, wherein the at least one memory stores instructions that, when executed by the at least one processor, cause the device to:
replicate and send a packet from the device via each of the first kernel tunnel and the second kernel tunnel;
wherein a first packet is accepted at a packet destination and a remainder of the packets are discarded at the packet destination.

7. The device of any one of the preceding claims, wherein facilitating of the communication between the device and the network gateway according to the connectivity policy includes performing load balancing between the first kernel tunnel and the second kernel tunnel and directing data of the device to the network gateway based on network conditions.

8. The device of any one of the preceding claims, wherein the device is coupled with one or more tethered devices and the connectivity policy includes connectivity information for the one or more tethered devices, wherein the means cause the device to:
receive one or more tethered device connectivity policies specific to each of the one or more tethered devices.

9. The device of any one of the preceding claims, wherein the at least one memory stores instructions that, when executed by the at least one processor, cause the device to:
update the connectivity policy at the kernel virtual switch upon a change in a network condition.

10. A network gateway for facilitating communication within a network, the network gateway comprising means for causing the network gateway to
send a connectivity policy to a device within the network; and
facilitate communication between the device and the network gateway according to the connectivity policy, wherein
the network gateway includes a kernel with at least a first kernel tunnel and a second kernel tunnel the first kernel tunnel connecting the network gateway to the device via a first access network and the second kernel tunnel connecting the network gateway to the device via a second access network,
the connectivity policy specifies at least one of the first kernel tunnel or the second kernel tunnel for downlink transmission of packets to the device, and
the network gateway includes a kernel virtual switch configured to switch between the first kernel tunnel and the second kernel tunnel to facilitate the communication between the device and the network gateway based on the connectivity policy.

11. The network gateway of claim 10, wherein the means cause the network gateway to:
assign a virtual internet protocol (IP) address to the device within the network, wherein the network gateway is configured to facilitate the communication between the device and the network gateway to enable communication between the device and at least one other device via the virtual IP address of the device and a virtual IP address of the at least one other device, the virtual IP address of the at least one other device being assigned by the network gateway.

12. The network gateway of claim 11, wherein the network gateway is configured to facilitate the communication between the device and the network gateway to enable communication between the device and a cloud-based device via the virtual IP address of the device and a physical IP address of the cloud-based device.

13. The network gateway of any one of claims 10-12, wherein the means cause the device to:
maintain the communication between the device and the network by switching from the first kernel tunnel to the second kernel tunnel upon an event indicating that communication should no longer occur via the first kernel tunnel.

14. The network gateway of any one of claims 10-13, wherein the connectivity policy specifies a priority order of the first kernel tunnel and the second kernel tunnel for each network flow from the network gateway.

15. The network gateway of any one of claims 10-14, wherein the means cause the device to:
send a packet from the network gateway via each of the first kernel tunnel and the second kernel tunnel;
wherein a first packet is accepted at a packet destination and a remainder of the packets are discarded at the packet destination.

16. The network gateway of any one of claims 10-15, wherein facilitating of the communication between the device and the network gateway according to the connectivity policy includes performing load balancing between the first kernel tunnel and the second kernel tunnel and directing data of the network gateway to the device based on the load balancing.

17. The network gateway of any one of claims 10-16, wherein the means cause the network gateway to:
send one or more tethered device connectivity policies specific to the device for each of one or more tethered devices of the device.

18. The network gateway of any one of claims 10-17, wherein the at least one memory stores instructions that, when executed by the at least one processor, cause the network gateway to:
update the connectivity policy at the kernel virtual switch upon a change in a network condition.
